# EUROPÄISCHE PATENTANMELDUNG

(11) **EP 2 756 998 A1**
(43) Veröffentlichungstag der Anmeldung: **23.07.2014**
(21) Anmeldenummer: 13005907.4
(22) Anmeldetag: 18.12.2013
(51) Int. Cl.: B60R 19/00, B62D 21/15

(54) **Adaptive Crashstruktur für ein Fahrzeug und zugehöriges Fahrzeug**

(30) Priorität: 21.01.2013 DE 102013000963
(71) Anmelder: AUDI AG, 85045 Ingolstadt (DE)
(72) Erfinder: Kunsch, Peter, 85123 Karlskron (DE); Klinkert, Carsten, 85122 Hitzhofen (DE); Sharp, Keith, 85051 Ingolstadt (DE); Uhlar, Stefan, 85057 Ingolstadt (DE)
(74) Vertreter: Mader, Wilfried

(57) **Zusammenfassung**

Die Erfindung betrifft eine adaptive Crashstruktur für ein Fahrzeug (1), welches im Bereich eines Radhauses (28) ein Deformationselement (22) aufweist, welches in einem deaktivierten Zustand eine Radbewegung freigibt, sowie ein zugehöriges Fahrzeug mit einer solchen Crashstruktur (10a, 10b). Erfindungsgemäß überführt das Deformationselement (22) im aktivierten Zustand ein im Radhaus (28) angeordnetes Rad (24) in eine vorgegebene Radstellung, wobei ein Unterbrechungssystem (34a, 34b) eine Übertra-gung der Radstellungsänderung auf ein Lenkrad (31) unterbindet.

## Beschreibung

Die Erfindung betrifft eine adaptive Crashstruktur für ein Fahrzeug gemäß dem Oberbegriff des Patentanspruchs 1 sowie ein zugehöriges Fahrzeug mit einer solchen Crashstruktur.

Gattungsgemäße adaptive Crashstrukturen für Fahrzeuge sind in zahlreichen Variationen bekannt und werden zur Absorbierung von auftretenden Kräften bei einem Unfall verwendet. Die bekannten Crashstrukturen eines Fahrzeugs sind für einen Frontalaufprall mit einer Überdeckung zum Unfallgegner von 100% bzw. minimal 40% ausgelegt. Bei diesen Überdeckungen können die auftretenden Kräfte beispielsweise über den Stoßfänger und die Längsträger des beaufschlagten Fahrzeugs durch Deformation dieser Strukturen absorbiert werden. Im Fall eines Unfalls mit geringer Überdeckung, wie beispielsweise 25%, ist eine Interaktion der Längsträger ausgeschlossen. Deshalb können die auftretenden Kräfte an der Crashstruktur vorbei, über die Felge in den Fußraum des Fahrzeugs geleitet werden. Für diese Fälle weisen die Crashstrukturen energieabsorbierende Bauteile auf, welche als Airbag ausgeführt sind und im aufgeblasenen Zustand auftretende Kräfte bei einem Aufprall absorbieren können.

Des Weiteren sind Lenksysteme bekannt, welche einen Übertragungsweg zwischen einem Lenkrad und einer Servoeinheit unterbrechen. In einer Unfallsituation kann die Servoeinheit die Steuerung der Räder übernehmen, ohne dass ein Fahrer während einer Unfallsituation über das Lenkrad in die Steuerung der Radstellung eingreifen kann. Dadurch kann eine Verletzungsgefahr des Fahrers reduziert werden, welche aus einer ruckartige Änderungen der Radstellung der Räder und einem damit verbunden Richtungswechsel des Lenkrads resultiert.

Aus der DE 198 35 705 A1 ist eine Karosserie für ein Fahrzeug mit einer Fahrgastzelle und einer an der Fahrgastzelle angebundenen Tragstruktur zur Anordnung von Fahrzeugbauteilen und zur Aufnahme von auf das Fahrzeug einwirkender Stoßenergie sowie mit vorderen und hinteren Rädern bekannt, welche jeweils von einem Radhaus umgeben sind. Hierbei grenzt das jeweilige Radhaus in Fahrzeuglängsrichtung auf der einen Seite an einen Seitenschweller an und ist auf der dazu gegenüberliegenden Seite durch einen Hohlraum von einem in Fahrzeugquerrichtung verlaufenden Stoßfänger beabstandet. Bei der beschriebenen Karosserie wird der jeweilige an den Stoßfänger angrenzende Hohlraum zumindest in Höhe des Stoßfängers mit einem energieabsorbierenden Bauteil versehen. Auf der dazu gegenüberliegenden Seite ist in Höhe des Seitenschwellers und/oder eines Längsträgers ein Deformationselement angeordnet, welches soweit in einen Freiraum des Radhauses ragt, dass die Freigängigkeit des Rades gewährleistet ist. Dadurch ist es möglich, dass die Räder bei einem Crash definiert auf den jeweiligen Seiten schweller auftreffen, wodurch die Energieaufnahmefähigkeit durch den Schweller erhöht werden kann. Die Deformationselemente und/oder die energieabsorbierenden Bauteile können als Airbag oder als Stoßenergieabsorptionselemente ausgeführt werden, welche aus Kunststoff und/oder Metall, insbesondere Leichtmetall, in Form von Schaum und/oder mit einer Wabenstruktur oder mit einer geeigneten Profilausbildung gefertigt sind.

Aus der DE 10 2009 046 375 A1 ist ein Lenksystem für ein Fahrzeug bekannt, welches im Übertragungsweg zwischen einem Lenkrad und einem Angriffspunkt einer Servoeinheit ein Kupplungselement aufweist, welches zwischen einer Lenkbewegung übertragenden Schließstellung und einer entkoppelten Öffnungsstellung verstellt werden kann. In der Schließstellung ist ein durchgehender Übertragungsweg zwischen dem Lenkrad und den lenkbaren Rädern gegeben, so dass Lenkbewegungen, welche vom Fahrer erzeugt werden, in konventioneller Weise übertragen werden. In der entkoppelten Öffnungsstellung des Kuppelelements ist der Übertragungsweg im Bereich zwischen dem Lenkrad und der Servoeinheit unterbrochen. Der Übertagungsweg zwischen der Servoeinheit und der Räder bleibt in der Öffnungsstellung geschlossen, so dass die Servoeinheit eine Lenkbewegung erzeugen kann, welche auf die Räder übertagen wird.

Die Aufgabe der Erfindung ist es, eine adaptive Crashstruktur für ein Fahrzeug zu schaffen, welche einen effektiven Insassenschutz bei einem seitlich versetzten Frontalaufprall bei geringer Gewichtszunahme der Crashstruktur bietet.

Eine weitere Aufgabe der Erfindung ist es ein Fahrzeug mit einer adaptiven Crashstruktur zu schaffen, welches einen effektiven Insassenschutz bei geringer Gewichtszunahme der adaptiven Crashstruktur bietet.

Erfindungsgemäß werden die Aufgaben durch Bereitstellung einer Crashstruktur für ein Fahrzeug mit den Merkmalen des Patentanspruchs 1 sowie durch die Bereitstellung eines Fahrzeugs mit den Merkmalen des Patentanspruchs 9 gelöst.

Um eine adaptive Crashstruktur für ein Fahrzeug und ein korrespondierendes Fahrzeug mit einer solchen adaptiven Crashstruktur zu schaffen, welche einen effektiven Insassenschutz, insbesondere bei einem seitlich versetzten Frontalaufprall, bei geringer Gewichtszunahme der adaptiven Crashstruktur bieten, weist die adaptive Crashstruktur erfindungsgemäß ein Unterbrechungssystem und ein Deformationselement auf, welches im aktivierten Zustand ein im Radhaus angeordnetes Rad in eine vorgegebene Radstellung überführt, wobei das Unterbrechungssystem eine Übertragung der Radstellungsänderung auf ein Lenkrad unterbindet. Durch das Deformationselement, welches vorzugsweise im Bereich eines Fußraumes an einem Querträger angeordnet ist, wird der Fußraum zusätzlich geschützt und ein Wegleiten des Fahrzeugs vom Kollisionsgegner durch die vorgegebene Radstellung ermöglicht. In vorteilhafter Weise kann die vorgegebene Radstellung das Fahrzeug vom eindringenden Objekt weg bewegen. Dadurch kann der Aufprallwinkel und der Abstand zum eindringenden Objekt verändert werden, wodurch die in Richtung Fahrgastraum wirkenden Kräfte reduziert werden können, wobei die auf den Fahrgastraum wirkende Crashenergie in vorteilhafter Weise weiter abgemildert werden kann. Durch das Unterbrechungssystem kann die Übertragung der Radstellungsänderung auf das Lenkrad unterbunden werden. In vorteilhafter Weise kann bei einer provozierten Änderung der Radstellung keine Drehbewegung am Lenkrad erfolgen, wodurch die Verletzungsgefahr für den Insassen reduziert werden kann. Des Weiteren kann das Deformationselement in vorteilhafter Weise Aufprallenergie durch Deformation absorbieren. Somit kann in vorteilhafter Weise das Verletzungsrisiko der Insassen bei seitlich versetzten Frontalaufprallunfällen reduziert werden, ohne beispielsweise zusätzliche Versteifungen im Bereich des Fußraums einzubringen, welche das Gewicht des Fahrzeugs erhöhen würden. Im deaktivierten Zustand gibt das Deformationselement die Radbewegung frei. Das bedeutet, dass das energieabsorbierende Bauteil im Normalbetrieb die Lenkbewegungen der Räder nicht beeinflusst.

Vorteilhafte Ausführungsformen und Weiterbildungen der Erfindung sind in den abhängigen Ansprüchen angegeben.

In vorteilhafter Ausgestaltung der erfindungsgemäßen adaptiven Crashstruktur kann mindestens ein pyrotechnisches System zur Aktivierung des Deformationselements und des Unterbrechungssystems vorgesehen werden, wobei ein Steuersignal das mindestens eine pyrotechnische System zündet. In vorteilhafter Weise kann somit die Reaktionszeit zwischen dem Erkennen einer relevanten Unfallsituation und der Aktivierung des Deformationselements und des Unterbrechungssystems verringert werden. Das pyrotechnische System kann hierbei als pyrotechnischer Aktuator ausgeführt sein, welcher in vorteilhafter Weise das Deformationselement ausrichtet. Des Weiteren kann das mindestens eine pyrotechnische System mindestens eine Sprengkapsel umfassen, welche dem Unterbrechungssystem zugeordnet ist und mindestens eine mechanische Verbindung zwischen dem Lenkrad und dem Rad unterbricht. In vorteilhafter Weise kann durch eine pyrotechnische Entriegelung der Verbindung zwischen Lenkrad und Rad sowie durch einen gezielten seitlichen Versatz eines Längslenkers eine Schrägstellung des Rades erzielt werden, wobei in einer bevorzugten Ausführungsform ein in Fahrtrichtung weisender Bereich des Rades in Richtung Fahrzeugmitte weist und ein gegen die Fahrtrichtung weisender Bereich des Rades vom Fahrzeug weg weist.

In weiterer vorteilhafter Ausgestaltung der adaptiven Crashstruktur kann das Deformationselement im aktivierten Zustand eine Ableitgruppe mit mindestens einer Ableitschräge ausbilden, wobei die mindestens eine Ableitschräge in einem vorgegebenen Winkel zur Fahrzeuglängsrichtung ausgerichtet ist und das Rad in die vorgegebene Radstellung überführt sowie ein eindringende Objekt in die vorgegebene Richtung ableitet. In vorteilhafter Weise kann das Deformationselement im aktivierten Zustand ein im Radhaus angeordnetes und von der Crashenergie in Richtung des Deformationselementes bewegtes Rad über die mindestens eine Ableitschräge in eine, vorgegebene Radstellung überführen. Das heißt, dass das von der Crashenergie bewegte Rad an der Ableitschräge des Deformationselements abgeleitet wird und in vorteilhafter Weise nicht in den Fußraum eindringt. Des Weiteren kann in vorteilhafter Weise eine vom Fahrzeug abgewandte Radseite, des in die vorgegebene Radstellung überführten Rads, eine zusätzliche Ableitfläche der Ableitgruppe ausbilden, welche ein Ableiten des Kollisionsgegners bzw. des eindringenden Objekts weg vom Fahrzeug ermöglicht. Des Weiteren kann in vorteilhafter Weise ein Blockmaß zwischen Fahrgastzelle und Kollisionsgegner bzw. eindringendem Objekt reduziert werden.

In weiterer vorteilhafter Ausgestaltung der adaptiven Crashstruktur kann das Unterbrechungssystem eine mechanische Verbindung zwischen einem Fahrwerkshilfsrahmen und einen unterem Längslenker unterbrechen. Des Weiteren kann das Unterbrechungssystem eine mechanische Verbindung zwischen einem Lenkgestänge und einem Radlenker unterbrechen. Somit kann in vorteilhafter Weise eine Übertragung der Radstellungsänderung auf ein Lenkrad unterbunden werden.

In weiterer vorteilhafter Ausgestaltung der erfindungsgemäßen Crashstruktur kann mindestens ein Crashsensor vorgesehen werden, dessen Signale einer Auswerte- und Steuereinheit zur Ausgabe des Steuersignals auswertet, wobei die Auswerte- und Steuereinheit das Steuersignal zur Aktivierung des Deformationselements und des Unterbrechungssystems ausgibt. Hierbei kann die Auswerte- und Steuereinheit das Steuersignal zur Aktivierung des Deformationselements und/oder des Unterbrechungssystems ausgeben, wenn ein seitlich versetzter Frontalaufprall eines äußeren Objekts erkannt und/oder eine Aufprallwahrscheinlichkeit eines äußeren Objekts im seitlich versetzten Frontbereich ermittelt wird. Vorzugsweise kann die Auslösung des Deformationselements und/oder des Unterbrechungssystems über im Fahrzeug bereits vorhandene Crashsensoren erfolgen, welche beispielsweise an der Fahrzeugfront angeordnet sind, so dass in vorteilhafter Weise keine zusätzlichen Kosten entstehen.

Vorteilhafte Ausführungsformen der Erfindung sind in der Zeichnung dargestellt und werden nachfolgend beschrieben.

Dabei zeigen:
- Fig. 1: ein schematisches Blockschaltbild einer Auslösefunktion zur Aktivierung einer Ableitgruppe und eines Unterbrechungssystems für ein erstes Ausführungsbeispiel einer erfindungsgemäßen adaptiven Crashstruktur für ein Fahrzeug,
- Fig. 2: ein schematisches Blockschaltbild einer Auslösefunktion zur Aktivierung einer Ableitgruppe und eines Unterbrechungssystems für ein zweites Ausführungsbeispiel einer erfindungsgemäßen adaptiven Crashstruktur für ein Fahrzeug,
- Fig. 3: eine schematische Draufsicht auf das in Fig.1 dargestellte erstes Ausführungsbeispiel einer erfindungsgemäßen adaptiven Crashstruktur für ein Fahrzeug in einem deaktivierten Zustand,
- Fig. 4: eine schematische Draufsicht auf das in Fig. 2 dargestellte zweite Ausführungsbeispiel einer erfindungsgemäßen adaptiven Crashstruktur in einem aktivierten Zustand.

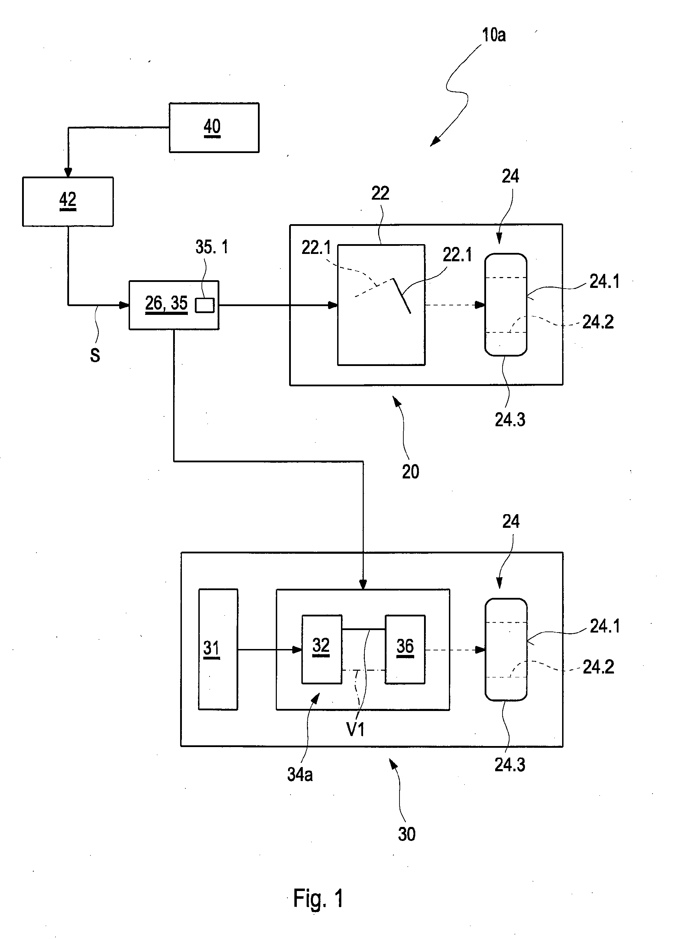

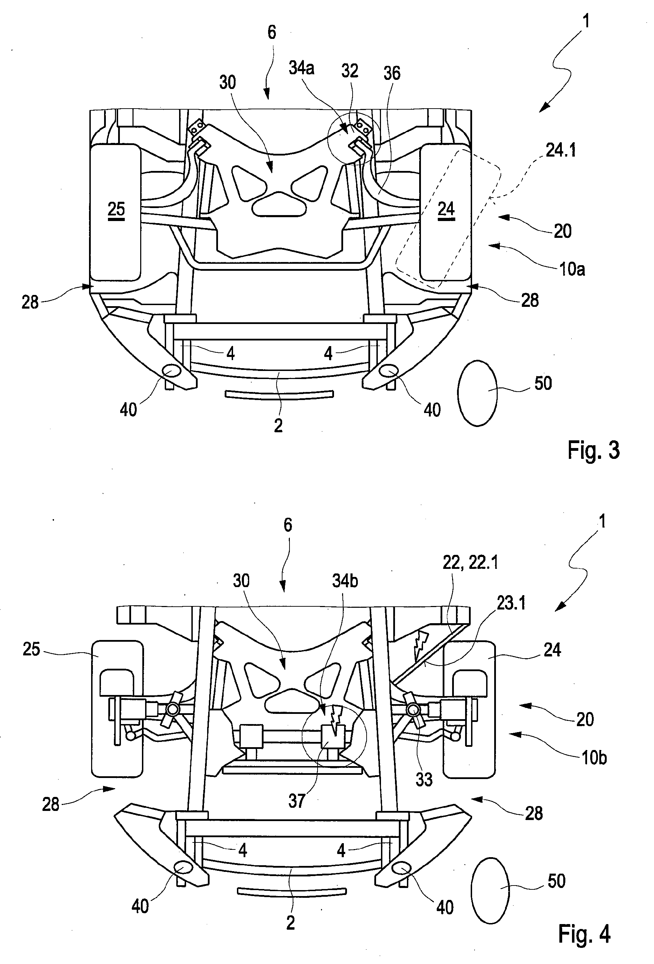

Wie aus Fig. 1 bis 4 ersichtlich ist, weist eine adaptive Crashstruktur 10a, 10b für ein Fahrzeug 1, im Bereich eines Radhauses 28 ein Deformationselement 22 auf, welches in einem in Fig. 3 dargestellten deaktivierten Zustand eine Radbewegung freigibt und in einem in Fig. 4 dargestellten aktivierten Zustand Crashenergie abbaut.

Wie aus Fig. 1 bis 4 weiter ersichtlich ist, weist ein Lenksystem 30 ein Lenkrad 31 oder ein anderes Lenkmittel, mindestens ein Lenkgestänge 33, mindestens einen Längslenker, ein Lenkgetriebe 37 und mindestens ein Rad 24 auf. Wobei die Elemente des Lenksystems 30 miteinander gekoppelt sind, so dass über entsprechende Wirkverbindungen V1, V2 eine Bewegung des Lenkrades 31 auf das Rad 24 übertragen wird und das Rad in eine korrespondierende Radstellung überführt wird. Entsprechend wird eine Änderung der Radstellung auf das Lenkrad 31 übertragen.

Erfindungsgemäß überführt das Deformationselement 22 im aktivierten Zustand ein im Radhaus 28 angeordnetes Rad 24 in eine vorgegebene Radstellung, wobei ein Unterbrechungssystem 34a, 34b eine Übertragung der Radstellungsänderung auf das Lenkrad 31 unterbindet.

Wie aus Fig. 1 bis 4 ersichtlich ist, bildet das Deformationselement 22 im aktivierten Zustand eine Ableitgruppe 20 mit mindestens einer Ableitschräge 22.1 aus, welche in einem vorgegebenen Winkel zur Fahrzeuglängsrichtung ausgerichtet ist und das eindringende Objekt 50 in diese vorgegebene Richtung ableitet.

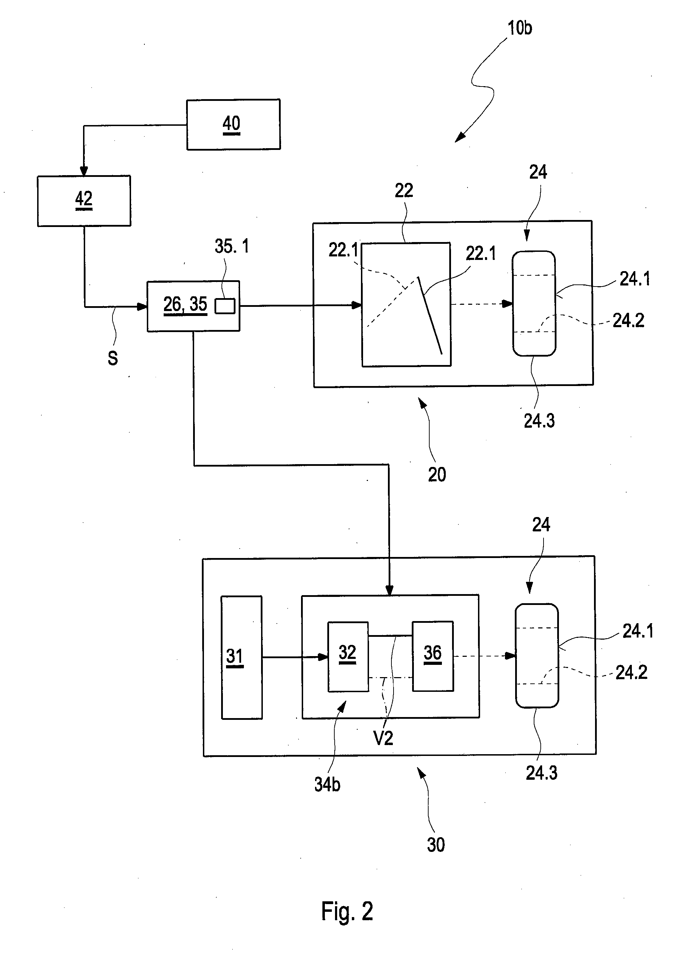

Wie aus Fig. 1 und 2 weiter ersichtlich ist, ist das Deformationselement 22 als Schräge mit einem Schenkel 22.1 ausgeführt, wobei der Schenkel 22.1 an einem Endbereich drehbeweglich am Radhaus 28 gelagert ist. Das Deformationselement 22 wird von einem pyrotechnischen System 26 aktiviert, wobei das von der Auswerte- und Steuereinheit 42 ausgegebene Steuersignal S das pyrotechnische System 26 zündet. Das pyrotechnische System 26 kann hierbei als pyrotechnischer Aktuator ausgeführt sein. Durch das pyrotechnische System kann der Schenkel 22.1 des Deformationselerrients 22 von einem deaktivierten Zustand in einen gestrichelt dargestellten aktivierten Zustand überführt werden. Weitere nicht dargestellte Ausführungsbeispiele des Deformationselements sind als Scharnier mit zwei Schenkeln, von denen mindestens ein Schenkel eine Ableitschräge ausbildet, oder als befüllbarer Körper ausgeführt, welcher im gefüllten Zustand mindestens eine Ableitschräge ausbildet.

Wie aus Fig. 1 und 2 weiter ersichtlich ist, wird das Unterbrechungssystem 34a, 34b von einem pyrotechnische System 35 aktiviert. Das pyrotechnische System 35 umfasst mindestens eine Sprengkapsel 35.1, welche dem Unterbrechungssystem 34a, 34b zugeordnet ist und mindestens eine mechanische Verbindung V1, V2 und/oder eine Wirkverbindung zwischen dem Lenkrad 31 und dem Rad 24 unterbricht.

In den dargestellten Ausführungsbeispielen weist die adaptive Crashstruktur ein pyrotechnisches System 26, 35 auf, welches das Deformationselement und das Unterbrechungssystem aktiviert. Es wäre aber auch eine Ausführung denkbar, in welchem das Deformationselement und das Unterbrechungssystem jeweils ein separates pyrotechnische System aufweisen.

Wie aus Fig. 1 bis 4 weiter ersichtlich unterschieden sich die dargestellten Ausführungsbeispiele bei der Ausführung des Unterbrechungssystems 34a, 34b. Das in Fig. 1 und Fig. 3 dargestellte Unterbrechungssystems 34a unterbricht eine Wirkverbindung V1 zwischen einem Fahrwerkshilfsrahmen 32 und einen unterem Längslenker 36,. wobei durch die pyrotechnische Entriegelung der Verbindung V1 von Fahrwerkshilfsrahmen 32 und unterem Längslenker 36 ein zusätzlicher gezielten seitlicher Versatz des Längslenkers 36 erzielt werden kann, welcher eine zusätzliche Schrägstellung des Rades 24 erwirken kann. Das in Fig. 2 und 4 dargestellte Unterbrechungssystems 34b unterbricht eine Wirkverbindung V2 zwischen einem Lenkgestänge 33 und einem Lenkgetriebe 37. Beide Ausführungsbeispiele ermöglichen eine Entkopplung des Rades 24 vom Lenkrad 31, so dass die durch das Deformationselement 22 hervorgerufene Änderung der Radstellung nicht auf das Lenkrad 31 übertragen wird. Des Weiteren kann ein Insasse nicht mehr über das Lenkrad 31 eingreifen, auf diese Weise kann verhindert werden, dass ein Insasse die Radstellung verändert oder sich an dem Lenkrad 31 verletzt, welches ohne Entkopplung die Drehbewegung des Rades 24 übertragen würde.

Wie aus Fig. 1 bis 4 weiter ersichtlich ist, sind Crashsensoren 40 vorgesehen, welche im dargestellten Ausführungsbeispiel im Frontbereich des Fahrzeugs 1 angeordnet sind. Signale der Crashsensoren 40 werden von einer Auswerte- und Steuereinheit 42 zur Ausgabe eines Steuersignals S ausgewertet. Hierbei gibt die Auswerte- und Steuereinheit 42 das Steuersignal S zur Aktivierung des Deformationselements 22 und des Unterbrechungssystems 34a, 34b aus, wenn durch die Auswertung ein seitlich versetzter Frontalaufprall eines Objekts 50 erkannt und/oder eine seitlich versetzte Aufprallwahrscheinlichkeit eines Objekts 50 ermittelt wird. Die Crashsensoren 40 können beispielsweise als Beschleunigungssensoren ausgeführt werden. Zur Auswertung können verschiedene Schwellwerte vorgegeben werden, wobei bei einer Überschreitung und/oder einer Unterschreitung von mindestens einem Schwellwert ein seitlicher Aufprall und/oder eine seitliche Aufprallwahrscheinlichkeit erkannt werden kann, so dass die Auswerteund Steuereinheit 42 das Steuersignal S ausgibt. Die Auswerte- und Steuereinheit 42 kann auch Bestandteil einer anderen Sicherheitseinrichtung, wie beispielsweise einem Airbagsteuersystem für den Fahrerairbag und/oder den Beifahrerairbag sein.

Wie aus Fig. 3 und 4 weiter ersichtlich ist, umfasst das Fahrzeug 1 im dargestellten Frontbereich einen Stoßfänger 2, welcher senkrecht zu einer Fahrzeuglängsrichtung verläuft und zwischen zwei Längsträgern 4 des Fahrzeugs 1 angeordnet ist. Hierbei sind die Radhäuser 28 benachbart zu den Längsträgern 4 angeordnet, wobei die Deformationselemente 22 in Höhe des Stoßfängers 2 und der Längsträger 4 im jeweiligen Radhaus 28 angeordnet sind.

Wie aus Fig. 3 und 4 weiter ersichtlich ist, schränkt das Deformationselement 22 des rechten Radhauses 28 im aktivierten Zustand die Radbewegung des Rades 24 ein, wobei der Schenkel 22.1 im aktivierten Zustand eine Ableitschräge 23.1 ausbildet, welche einen vorgegebenen Winkel zur Fahrzeuglängsrichtung aufweist.

Wie aus Fig. 3 und 4 weiter ersichtlich ist, kann das Deformationselement 22 im aktivierten Zustand ein im Radhaus 28 angeordnetes und von der Crashenergie in Richtung des Deformationselementes 22 bewegtes Rad 24, über die mindestens eine Ableitschräge 23.1 in eine vorgegebene Radstellung überführen. Die mindestens eine Ableitschräge 23.1 bewirkt hierbei ein "Herausdrehen" des Rades 24, wodurch das Blockmaß zwischen Fußraum 6 und eindringenden Objekt 50 reduziert wird. Weiterhin führt die mindestens eine Ableitschräge 22.1 ebenfalls zu einem Ableiten des in das Fahrzeuges 1 eindringenden Objekts 50.

Wie aus Fig. 4 weiter ersichtlich ist, kann das Deformationselement 22 eine Keilform annehmen, wobei das Deformationselement 22 zwischen dem Rad 24 und dem korrespondierenden Radhaus 28 angeordnet ist. Je nach Ausführung kann das Deformationselement 22 das Rad 24 in einer vorgegebenen Radstellung fixieren.

Bei dem in Fig. 4 dargestellten Zustand, ist das Deformationselement 22 im rechten Radhaus 28 im aktivierten Zustand, wobei das Objekt 50 noch nicht eingedrungen ist und das Rad 24 noch nicht von der Crashenergie bewegt wurde. Im Falle eines Eindringens des Objekts 50 wird das Rad 24 durch die Crashenergie auf die mindestens eine Ableitschräge 23.1 gedrückt und von dieser abgeleitet und somit in eine vorgegebene Radstellung gebracht. Die vorgegebene Radstellung kann das Fahrzeug 1 zusätzlich vom eindringenden Objekt 50 wegbewegen.

Eine vom Fahrzeug 1 abgewandte Radseite kann eine zusätzliche Ableitfläche 24.1 der Ableitgruppe 20 ausbilden. Hierbei wird die zusätzliche Ableitfläche 24.1 von einer Felge 24.2 des Rades 24, welche in der Regel aus Metall, beispielsweise Aluminium, Stahl usw., gefertigt ist, und einem Reifenmantel 24.3 gebildet.

Wie aus Fig. 3 und 4 weiter ersichtlich verhindert die Ableitvorrichtung 20 der erfindungsgemäßen Crashstruktur 10a, 10b bei Unfällen mit geringer Überdeckung zum Unfallgegner 50 ein Einleiten der auftretenden Kräfte über die Felge 24.2 in den Fußraum 6 des Fahrzeugs 1, ohne dass zusätzliche Versteifungen im Bereich des Fußraums 6 angebracht werden müssen. Des Weiteren erfolgt bei einer provozierten Änderung der Radkinematik keine Drehbewegung am Lenkrad 31, wodurch die Verletzungsgefahr für den Insassen reduziert wird.

### BEZUGSZEICHENLISTE

- 1: Fahrzeug
- 2: Stoßfänger
- 4: Längsträger
- 6: Fußraum
- 10a, 10b: Adaptive Crashstruktur
- 20: Ableitgruppe
- 22: Deformationselement
- 22.1: Schenkel
- 23.1: Ableitschräge
- 24, 25: Rad
- 24.1: Ableitfläche
- 24.2: Felge
- 24.3: Reifen
- 26, 35: pyrotechnisches System
- 35.1: Sprengkapsel
- 28: Radhaus
- 30: Lenksystem
- 31: Lenkrad
- 32: Fahrwerkhilfsrahmen
- 33: Lenkgestänge
- 34a, 34b: Unterbrechungssystem
- 36: Längslenker
- 37: Lenkgetriebe
- 40: Crashsensor
- 42: Auswerte- und Steuereinheit
- 50: Objekt
- S: Steuersignal
- V1: Wirkverbindung zwischen Hilfsrahmen und Längslenker
- V2: Wirkverbindung zwischen Lenkgestänge und Lenkgetriebe

## Patentansprüche

1. Adaptive Crashstruktur für ein Fahrzeug (1), welches im Bereich eines Radhauses (28) ein Deformationselement (22) aufweist, welches in einem deaktivierten Zustand eine Radbewegung freigibt, **dadurch gekennzeichnet, dass** das Deformationselement (22) im aktivierten Zustand ein im Radhaus (28) angeordnetes Rad (24) in eine vorgegebene Radstellung überführt, wobei ein Unterbrechungssystem (34a, 34b) eine Übertragung der Radstellungsänderung auf ein Lenkrad (31) unterbindet.

2. Adaptive Crashstruktur nach Anspruch 1, **dadurch gekennzeichnet, dass** mindestens ein pyrotechnisches System (26, 35) zur Aktivierung des Deformationselements (22) und des Unterbrechungssystems (34a,34b) vorgesehen ist, wobei ein Steuersignal (S) das mindestens eine pyrotechnische System (26, 35) zündet.

3. Adaptive Crashstruktur nach Anspruch 1 oder 2, **dadurch gekennzeichnet, dass** das mindestens eine pyrotechnische System (26, 35) mindestens eine Sprengkapsel (35.1) umfasst, welche dem Unterbrechungssystem (34a, 34b) zugeordnet ist und mindestens eine mechanische Verbindung zwischen dem Lenkrad (31) und dem Rad (24) unterbricht.

4. Adaptive Crashstruktur nach einem der Ansprüche 1 bis 3, **dadurch gekennzeichnet, dass** das Deformationselement (22) im aktivierten Zustand eine Ableitgruppe (20) mit mindestens einer Ableitschräge (23.1) ausbildet, wobei die mindestens eine Ableitschräge (23.1) in einem vorgegebenen Winkel zur Fahrzeuglängsrichtung ausgerichtet ist und das Rad (24) in die vorgegebene Radstellung überführt und ein eindringende Objekt (50) in die vorgegebene Richtung ableitet.

5. Adaptive Crashstruktur nach Anspruch 4, **dadurch gekennzeichnet, dass** eine vom Fahrzeug (1) abgewandte Fläche des Rades (24) eine zusätzliche Ableitfläche (24.1) der Ableitgruppe (20) ausbildet.

6. Adaptive Crashstruktur nach einem der Ansprüche 1 bis 5, **dadurch gekennzeichnet, dass** das Unterbrechungssystem (34a) eine Wirkverbindung (V1) zwischen einem Fahrwerkshilfsrahmen (32) und einen unterem Längslenker (36) unterbricht.

7. Adaptive Crashstruktur nach einem der Ansprüche 1 bis 5, **dadurch gekennzeichnet, dass** das Unterbrechungssystem (34b) eine Wirkverbindung (V2) zwischen einem Lenkgestänge (33) und einem Lenkgetriebe (37) unterbricht

8. Adaptive Crashstruktur nach einem der Ansprüche 1 bis 7, **dadurch gekennzeichnet, dass** mindestens ein Crashsensor (40) vorgesehen ist, dessen Signale eine Auswerte- und Steuereinheit (42) zur Ausgabe des Steuersignals (S) auswertet, wobei die Auswerte- und Steuereinheit (42) das Steuersignal (S) zur Aktivierung des Deformationselements (22) und des Unterbrechungssystems (34a, 34b) ausgibt, wenn durch die Auswertung ein seitlich versetzter Frontalaufprall eines äußeren Objekts (50) erkannt und/oder eine Aufprallwahrscheinlichkeit im seitlich versetzten Frontbereich eines äußeren Objekts (50) ermittelt wird.

9. Fahrzeug mit einer adaptiven Crashstruktur, **dadurch gekennzeichnet, dass** die adaptive Crashstruktur (10) nach einem der Ansprüche 1 bis 8 ausgeführt ist.
